# EUROPEAN PATENT APPLICATION

(11) **EP 4 120 062 A1**
(43) Date of publication of application: **18.01.2023**
(21) Application number: 21185907.9
(22) Date of filing: 15.07.2021
(51) Int. Cl.: G06F 3/16, H04B 13/00

(54) **METHOD AND APPARATUS FOR AUDIO STREAMING**

(71) Applicant: NXP B.V., 5656 AG Eindhoven (NL)
(72) Inventor: Meijer, Rinze Ida Mechtildis Peter, 5656 AG Eindhoven (NL); Joseph, Antony, 5656 AG Eindhoven (NL); Rajan Kesavelu Shekar, Pramod, 5656 AG Eindhoven (NL)
(74) Representative: Miles, John Richard

(57) **Abstract**

A method and apparatus for audio stream sharing via a wireless link between an audio source device having an RF transceiver and audio sink devices each having an RF transceiver and a body area network (BAN) transceiver is described. Audio data is wirelessly streamed between an audio source device and an audio sink device via the respective RF transceiver. A user contact is detected on one of the audio sink device and a further audio sink device resulting in a BAN connection between the respective BAN transceivers of the audio sink device and the further audio sink device. In response to determining the user contact, a wireless link is setup between the audio source device and the further audio sink device. Audio data is then wirelessly streamed between the audio source and the further audio sink device via the respective RF transceivers.

## Description

### FIELD

This disclosure relates to a method and apparatus for audio stream sharing via a wireless link between an audio source device having a radio-frequency (RF) transceiver and audio sink devices having an RF transceiver and a body area network (BAN) transceiver.

### BACKGROUND

Devices which include or provide audio content such as mobile phones, portable audio media players and other audio source devices may wirelessly stream audio data to an audio sink device including a speaker for playback to a user. Examples of audio sink devices include wireless earbuds, wireless headphones or other audio player including an RF transceiver and speaker, for example an in-car infotainment system. Audio data may include for example speech, music or other audio content. The wireless link may use a Bluetooth or other RF protocol.

### SUMMARY

Various aspects of the disclosure are defined in the accompanying claims. In a first aspect there is provided method of wireless streaming of audio data between an audio source device comprising an RF transceiver and one or more audio sink devices each audio sink device comprising a RF transceiver and a body area network (BAN) transceiver the method comprising: wirelessly streaming audio data between an audio source device and an audio sink device via the respective RF transceivers; determining a user contact on one of the audio sink device and a further audio sink device resulting in a BAN connection between the respective BAN transceivers of the audio sink device and the further audio sink device; in response to determining the user contact, setting up a wireless link between the audio source device and the further audio sink device ; and wirelessly streaming audio data between the audio source device and the further audio sink device via the respective RF transceivers wherein at least one of the audio sink device and the further audio sink device is a body-worn audio sink device.

In one or more embodiments, setting up the wireless link may further comprise: (i) transmitting a further audio sink device identifier from the further audio sink device to the audio sink device via a body area network formed between the respective BAN transceivers; (ii) transmitting the further audio sink device identifier from the audio sink device to the audio source device via the respective RF transceivers.

In one or more embodiments, authenticating the wireless link may further comprise: transmitting authentication data from the audio sink device to the further audio sink device via a body area network formed between the respective BAN transceivers.

In one or more embodiments, the method may further comprise: determining the duration of a user contact on one of the audio sink device and the further audio sink device ; stopping wirelessly streaming audio data between the audio source device and the audio sink device dependent on the contact duration.

In one or more embodiments, the respective RF transceivers may comprise Bluetooth LE transceivers and the respective BAN transceivers may comprise Near Field Electro Magnetic Induction, NFEMI, transceivers.

In one or more embodiments, setting up the wireless link may comprise: (i) transmitting a further audio sink device identifier comprising a Bluetooth ID and short term key from the further audio sink device to the audio sink device via a body area network formed between the respective NFEMI transceivers; (ii) transmitting the further audio sink device identifier from the audio sink device to the audio source device via the respective RF transceivers.

In one or more embodiments, setting up the wireless link may comprise: transmitting authentication data comprising a passkey from the further audio sink device to the audio sink device via a body area network formed between the respective NFEMI transceivers.

In one or more embodiments, the audio sink device is a body-worn audio sink device and the further audio sink device is an off-body audio sink device.

In one or more embodiments, the further audio sink device is a body-worn audio sink device and the audio sink device is an off-body audio sink device.

In a second aspect, there is provided an audio sink device comprising: a body area network (BAN) transceiver; an RF transceiver; a processor coupled to the BAN transceiver and the RF transceiver; wherein the processor is configured to: receive audio data from an audio source device via the RF transceiver for audio playback; detect a formation of a BAN between the audio sink device and a further audio sink device; and either: transmit authentication data to the further audio sink device via the BAN transceiver for setting up a wireless link between the further audio sink device and the audio source device; or (i) receive a further audio sink device identifier via the BAN transceiver; (ii) transmit the further audio sink device identifier to the audio source device via the RF transceiver for setting up a wireless link between the further audio sink device and the audio source device; wherein at least one of the audio sink device and the further audio sink device is a body-worn audio sink device.

In one or more embodiments, the processor may be further configured to: determine a duration of the BAN connection corresponding to the duration of a user contact; and discontinue audio playback by the audio sink device in response to the user contact exceeding a predetermined duration.

In one or more embodiments, the processor may be further configured to: receive a signal via the BAN transceiver from the further audio sink device, the signal indicating a contact of a user of the audio sink device with the further audio sink device.

In one or more embodiments, the processor may be further configured to: transmit a signal via the BAN transceiver to the further audio sink device, the signal indicating a contact of a user of the further audio sink device with the audio sink device.

In one or more embodiments, the RF transceiver may be configured as a Bluetooth LE transceiver and the BAN transceiver may be configured as a Near Field Electro-Magnetic Induction, NFEMI, transceiver.

In a third aspect, there is provided an audio source device for streaming audio to an audio sink device and a further audio sink device, wherein one of the audio sink device and the further audio sink device is a body-worn audio sink device, the audio source device comprising: an RF transceiver; a processor coupled to the RF transceiver; wherein the processor is configured to: transmit audio data to an audio sink device via the RF transceiver; receive a further audio sink device identifier from the audio sink device via the RF transceiver, the further audio sink device identifier being provided to the audio sink device via a body area network channel formed between the audio sink device and the further audio sink device; in response to receiving the further audio sink device identifier, transmit a handover response to the audio sink device; setup the connection with the further audio sink device: and transmit audio data to the further audio sink device via the RF transceiver.

Embodiments of the audio source device and audio sink device may be include in an audio system comprising an audio source device and two or more instances of the audio sink device; wherein one of the audio sink devices is configured as a wearable device.

Embodiments of the audio sink device may be include in an audio system comprising an audio source device and two or more instances of the audio sink device; wherein one of the audio sink devices is configured as a wearable device, the audio source device comprising: an RF transceiver; a processor coupled to the RF transceiver; wherein the processor is configured to: transmit audio data to at least one of the audio sink device and the further audio sink device via the RF transceiver; and wherein one of the audio sink device and the further audio sink device is a body-worn audio sink device.

In a further aspect, there is provided a non-transitory computer readable media comprising a computer program comprising computer executable instructions which, when executed by a computer, causes the computer to perform a method of wireless streaming of audio data between an audio source device comprising an RF transceiver and one or more audio sink devices each audio sink device comprising a RF transceiver and a body area network (BAN) transceiver, the method comprising: wirelessly streaming audio data between an audio source device and an audio sink device via the respective RF transceivers; determining a user contact on one of the audio sink device and a further audio sink device resulting in a BAN connection between the respective BAN transceivers of the audio sink device and the further audio sink device; in response to determining the user contact, setting up a wireless link between the audio source device and the further audio sink device; and wirelessly streaming audio data between the audio source device and the further audio sink device via the respective RF transceivers wherein at least one of the audio sink device and the further audio sink device is a body-worn audio sink device.

In one or more embodiments of the non-transitory computer readable media of wherein setting up the wireless link may comprise: (i) transmitting a further audio sink device identifier from the further audio sink device to the audio sink device via a body area network formed between the respective BAN transceivers; (ii) transmitting the further audio sink device identifier from the audio sink device to the audio source device to the audio source device via the respective RF transceivers .

In one or more embodiments of the non-transitory computer readable media authenticating the wireless link may comprise: transmitting authentication data from the audio sink device to the further audio sink device via a body area network formed between the respective BAN transceivers.

### BRIEF DESCRIPTION OF THE DRAWINGS

In the figures and description like reference numerals refer to like features. Embodiments are now described in detail, by way of example only, illustrated by the accompanying drawings in which:
Figure 1 shows a system for sharing an audio stream including an audio source device and two audio sink devices according to an embodiment.
Figure 2A illustrates a first use-case for sharing an audio stream using the system of figure 1.
Figure 2B illustrates a second use-case for sharing an audio stream using the system of figure 1.
Figure 3A shows a method of sharing an audio stream according to an embodiment.
Figure 3B shows a method of sharing an audio stream according to an embodiment.
Figure 4A shows an event sequence for sharing an audio stream via Bluetooth LE according to an embodiment.
Figure 4B shows an event sequence for sharing an audio stream via Bluetooth LE according to an embodiment.
Figure 5A shows the response of an near field electromagnetic induction (NFEMI) antenna on a wearable device to the user touching an off-body device.
Figure 5B shows the response of an NFEMI antenna on an off-body device to a user touching the off-body device.
Figure 6A shows a Bluetooth LE link setup method for an audio sink device according to an embodiment.
Figure 6B shows an audio streaming method for an audio sink device implementing the method of Figure 6A.
Figure 6C shows an audio streaming control method for the audio sink device implementing the method of Figure 6A.
Figure 6D shows a method of link setup and audio stream forwarding implemented on an audio source device.
Figure 7 shows a method of sharing an audio stream according to an embodiment.
Figure 8 shows an event sequence for sharing an audio stream via Bluetooth LE according to an embodiment.
Figure 9 shows a method of setting up a Bluetooth LE link for sharing an audio stream received by an audio sink device according to an embodiment.

### DETAILED DESCRIPTION OF EMBODIMENTS

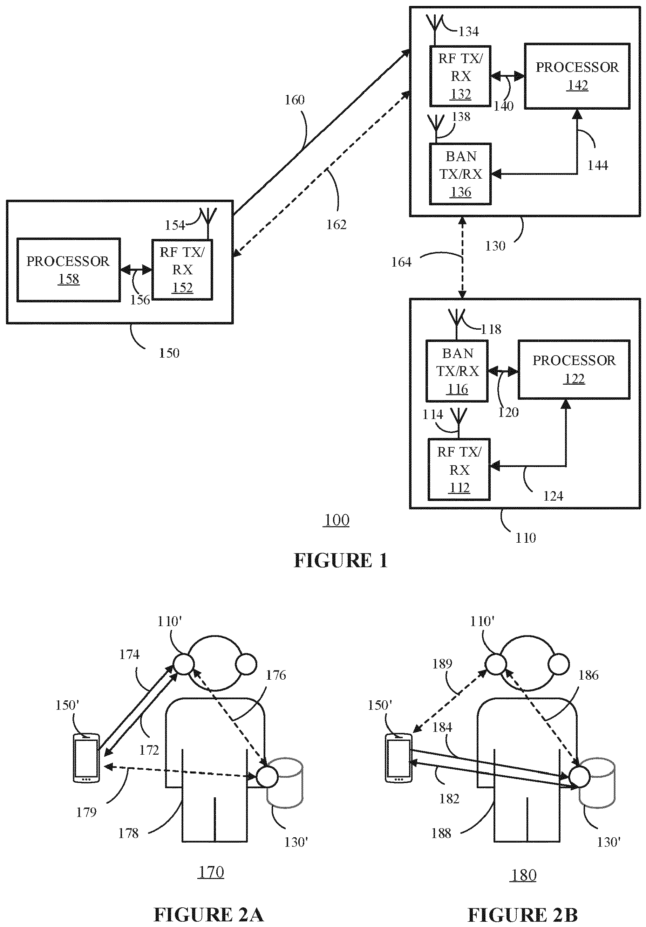

Figure 1 shows an audio system 100 according to an embodiment. The audio system 100 includes an audio source device 150, a first audio sink device 110, and a second audio sink device 130. The first audio sink device 110 may be a wearable device which may be referred to as an on-body device. The second audio sink device may be a non-wearable device which may be referred to as an off-body device. The first audio sink device 110 may include an RF transceiver 112 and antenna 114, a body area network (BAN) transceiver 116 and BAN antenna 118, and a processor 122. The processor 122 may have a connection 120 to the BAN transceiver 116. The processor 122 may have a connection 124 to the RF transceiver 112. The second audio sink device 130 may include an RF transceiver 132 and antenna 134, a body area network (BAN) transceiver 136 and an antenna 138, and a processor 142. The processor 142 may have a connection 144 to the BAN transceiver 136. The processor 142 may have a connection 140 to the RF transceiver 132. The audio source device 150 may include a processor 158, an RF transceiver 152 and antenna 154. The processor 158 may be connected to the RF transceiver 152 via connection 156.

The RF transceivers 112, 132, and 152 may communicate using the same protocol for example Bluetooth, Wi-Fi, or some other wireless communication protocol. The BAN transceivers 116, 136 may implement a body area network for example using near field electromagnetic induction (NFEMI). The audio source device 150 and the audio sink devices 110, 130 may be implemented in hardware or a combination of hardware and software.

In operation of the audio system 100 as illustrated, the audio source device 150 may transmit audio data 160 via a wireless link 162 established between the RF transceiver 152 of the audio source device 150 and the RF transceiver 132 of the second audio sink device 130. The first audio sink device 110 may be a wearable device such as earbuds or headphones. The second audio sink device 130 may detect that a user wearing the first audio sink device 110 has touched or made contact the second audio sink device 130. This may result in a body area network channel 164 being formed between the BAN transceiver 116 of the first audio sink device 110 and the BAN transceiver 136 of the second audio sink device 130. The detection and confirmation of a user contact may be determined by transmitting one or more signals via the first audio sink BAN transceiver 116, the second audio sink BAN transceiver 136 or by a dedicated touch sensor (not shown) coupled to the processor 142 in the second audio sink device 130.

Following contact detection, the authentication credentials required to set up a wireless link between the audio source device 150 and the first audio sink device 110 may be sent to or received from the second audio sink device 130 via the body channel 164. These authentication credentials may include for example a device identifier (ID), a shared pass key or some other information required to setup a wireless link.

In some embodiments the first audio sink device ID may be transmitted from the first audio sink device BAN transceiver 116 via the body channel 164 to the second audio sink device 130. The second audio sink device 130 may then transmit the first audio sink device ID to the audio source device 150 via the RF transceiver and the established wireless link 162. The audio source device 150 may receive the first audio sink device ID and setup a wireless link to the first audio sink device 110. The audio stream transmitted from the audio source device 150 via the RF transceiver 152 may then be received by the first audio sink device 110 via the RF transceiver 112.

Alternatively or in addition, in some embodiments the second audio sink device 130 may transmit a passkey to the first audio sink device 110 when a user contact has been detected which may allow the first audio sink device 110 to receive an audio broadcast from the audio source device 150 via the RF transceiver 150.

In this way an audio stream received by the second audio device 130 may be shared with a first audio sink device 110 in response to a user wearing the first audio sink device 110 touching or tapping the second audio sink device 130.

Figures 2A, 2B illustrate some example use-cases 170, 180 for sharing an audio stream using an audio system 100. In this example a mobile phone 150' may be the audio source device. Wireless earbuds 110' may be the first audio sink device and a wireless speaker 130' may be the second audio sink device.

In figure 2A, a user 178 may be listening to audio 174 on wireless earbuds 110' transmitted from the mobile phone 150' via a Bluetooth LE link 172. The user 178 may touch wireless speaker 130' which establishes a body communication channel 176 between the wireless earbuds 110' and the wireless speaker 130'. Authentication credentials may be shared between the wireless earbuds 110' , the wireless speaker 130' and, in some examples, the mobile phone 150' as described for the audio system 100 to establish a wireless link 179 between the mobile phone 150' and the wireless speaker 130'. The audio stream initially received by the wireless earbuds 110' may then be received by the wireless speaker 130'.

In figure 2B, a user 188 may be listening to audio 184 on wireless speaker 130' transmitted from the mobile phone 150' via a Bluetooth LE link 182. The user 188 may touch smart speaker 130' which establishes a body communication channel 186 between the wireless earbuds 110' and the wireless speaker 130'. Authentication credentials may be shared between the wireless earbuds 110' , the wireless speaker 130' and, in some examples, the mobile phone 150' to establish a wireless link 189 between the mobile phone 150' and the wireless earbuds 110'. The audio stream initially received by the wireless speaker 130' may then be received by the wireless speaker 110'. In this way an audio stream initially received by one of the audio sink devices 110', 130' may be shared with the other audio sink device 110', 130' in response to a user wearing the first audio sink device 110' touching or tapping the second audio sink device 130'.

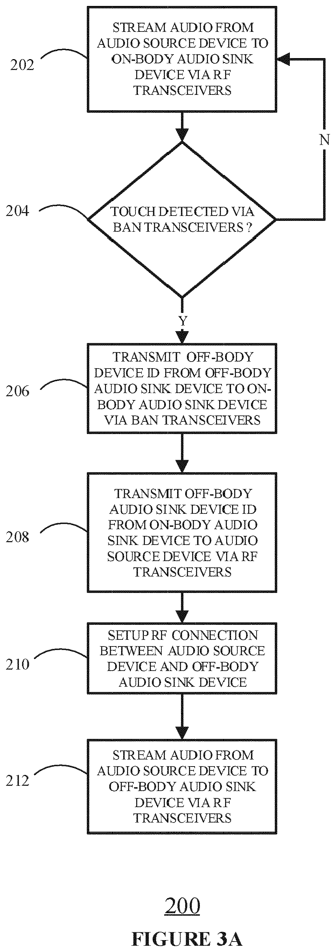

Figure 3A shows a method of sharing an audio stream 200 according to an embodiment which may for example implement the use case 170 illustrated in figure 2A . The method 200 may be implemented for example by the audio sink devices 110, 130 and audio source device 150 in the audio system 100. In step 202 audio may be streamed from an audio source device to an on body or wearable audio sink device via RF transceivers. In step 204 the method 200 may check to see if a contact has been detected between a user of the on body audio sink device for example audio sink device 110 and an off-body audio sink device, for example audio sink device 130. The touch detection may be done via BAN transceivers or by a dedicated touch detector on the off-body audio sink device. In step 206 the off body device ID may be transmitted from the off body audio sink device to the on body audio sink device via BAN transceivers. In step 208 the off body audio sink device ID may be transmitted from the on body audio sink device to the audio source device via RF transceivers. In step 210 and RF connection between the audio source device and the off body device may be set up by the audio source device using the off body device ID received. In step 212 audio may be streamed from the audio source device to the off body audio sink device via RF transceivers.

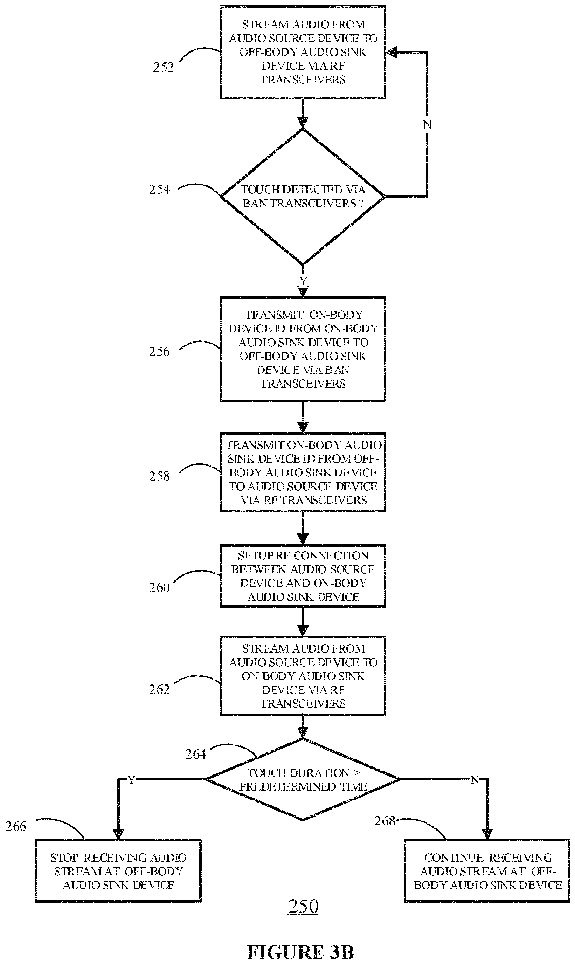

Figure 3B shows a method of sharing an audio stream 250 according to an embodiment which may for example implement the use case 180 illustrated in figure 2B. The method 250 may be implemented for example by the audio sink devices 110, 130 and audio source device 150 in the audio system 100. In step 252 audio may be streamed from an audio source device to an off body audio sink device via RF transceivers. In step 254 the method 200 may check to see if a contact has been detected between a user of an on body audio sink device for example audio sink device 110 and the off-body audio sink device, for example audio sink device 130. The touch detection may be done via BAN transceivers or by a dedicated touch detector on the off-body audio sink device.

In step 256 the on body device ID may be transmitted from the on body audio sink device to the off body audio sink device via BAN transceivers. In step 258 the on body audio sink device ID may be transmitted from the off body audio sink device to the audio source device via RF transceivers. In step 260 an RF connection between the audio source device and the on body device may be set up by the audio source device using the on body device ID received. In step 262 audio may be streamed from the audio source device to the on body audio sink device via RF transceivers.

In step 264 method 250 may compare the duration of the contact between the user and the off body audio sink device and compare it with a predetermined time. If the contact duration is greater than the predetermined time then in step 266 the off body audio sink device may stop receiving the audio stream. Otherwise the method proceeds to step 268 and the audio stream continues to be received by the off body audio sink device. Consequently depending on the duration of the contact between the user wearing the on body audio sink device and the off body audio sink device, the audio content is streamed either to both the on body audio sink device and the off body audio sink device or is transferred from the off body audio sink device to the on body audio stream device. In some examples steps 264, 266 and 268 may be omitted. In other examples the method 200 may also include steps to determine the touch duration time and optionally discontinue or continue receiving the audio stream at the on body audio sink device depending on the touch duration.

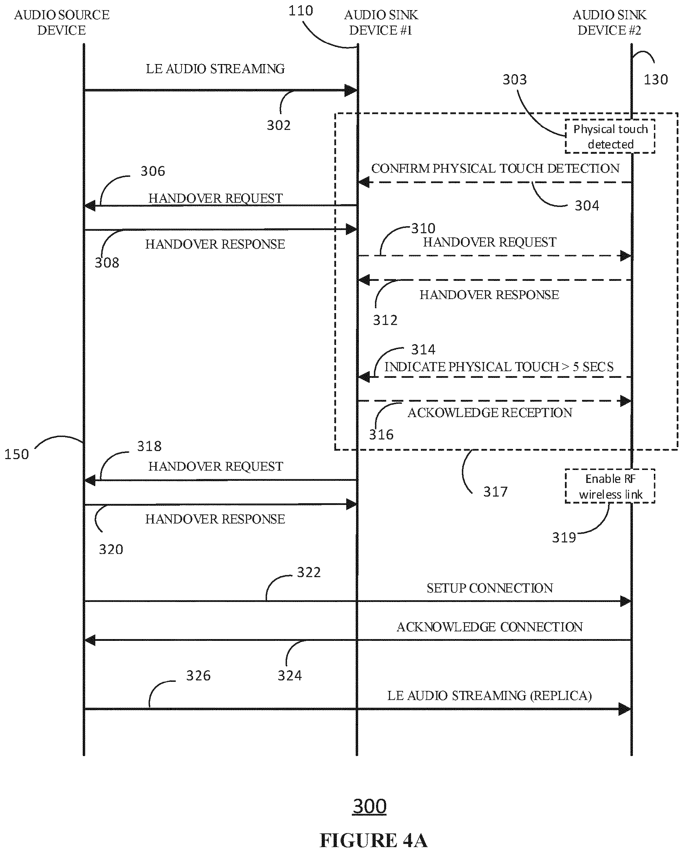

Figure 4A shows an event sequence 300 for sharing an audio stream via Bluetooth LE according to an embodiment. The event sequence 300 may be implemented for example by the audio system 100 where the respective RF transceivers 112, 132, and 152 are configured as Bluetooth LE transceivers and implements the use case 170 illustrated in figure 2A. The solid arrows represent Bluetooth LE transactions and the dashed arrows represent BAN transactions. The region 317 indicates when the touch is detected and the body communication channel i.e. body area network is in place or formed.

Step 302 shows the Bluetooth LE audio streaming between the audio source device 150 and the on body audio sink device 110. In this example the Bluetooth LE audio stream uses the connected isochronous stream (CIS) mechanism for connection between the Bluetooth LE devices 150, 110 with the appropriate connection setup and back channel. The following authentication information may be needed to set-up a secure Bluetooth link between audio source and off-body-device. Firstly a Bluetooth ID - Bluetooth Device Address (or BD_ADDR) is a unique 48-bit identifier assigned to each Bluetooth device by the manufacturer. Secondly, secure pairing credentials - Consists of Short Term Key (STK) exchange between the devices for secure authentication.

In step 303, the second audio sink device 130 which may be an off-body audio sink device may detect a contact by the wearer of the first audio sink device 110.

In step 304, the second audio sink device 130 may then transmit a confirmation of physical touch detection via the body area network. The first audio sink device 110 may then transmit a handover request 306 to the audio source device 150 and receive a handover response 308 with the STK and Bluetooth ID of the audio source device 150. In some examples the first audio sink device 110 may already store the audio source device ID and secure pairing credentials because there is already an active Bluetooth LE link between the audio source device 150 and the first audio sink device 110. In this case steps 306 and 308 may be omitted.

In step 310, a handover request including the received or stored STK may be transmitted from the first audio sink device 110 to the second audio sink device 130. In step 312 the second audio sink device 130 may transmit a handover response including the STK to be shared with the audio source device 150 to the first audio sink device 110. The second audio sink device may also check the received STK provided for audio source device 150 received from first audio sink device 110.

In step 314 the second audio sink device 130 may indicate that the duration of the physical touch exceeds a predetermined time. As illustrated this predetermined time is five seconds, but in other examples it may be less than or more than five seconds. In step 316 first audio sink device 110 transmits an acknowledgement of the reception of the physical touch indication by the second audio sink device 130. In some examples steps 314 and 316 may be omitted.

In step 318 the first audio sink device 110 then transmits a handover request including the STK of the second audio sink device 130 to the audio source device 150. In step 320 the audio source device 150 transmits a handover response to the first audio sink device 110. The wireless link of the second audio sink device 130 may be enabled in step 319.

In step 322 a connection request is transmitted between the audio source device 150 and the second audio sink device 130. In step 324 an acknowledge is transmitted from the second audio sink device 130 to the audio source device 150. If the connection is successfully set up then in step 326 a replica of the original audio stream is then received from the audio source device 150 by the second audio sink device 130. Optionally the first audio sink device 110 may stop receiving the audio stream. In some examples, whether or not the first audio sink device 110 stops receiving the audio stream may depend on the duration of the contact of a wearer of the first audio sink device 110 with the second audio sink device 130.

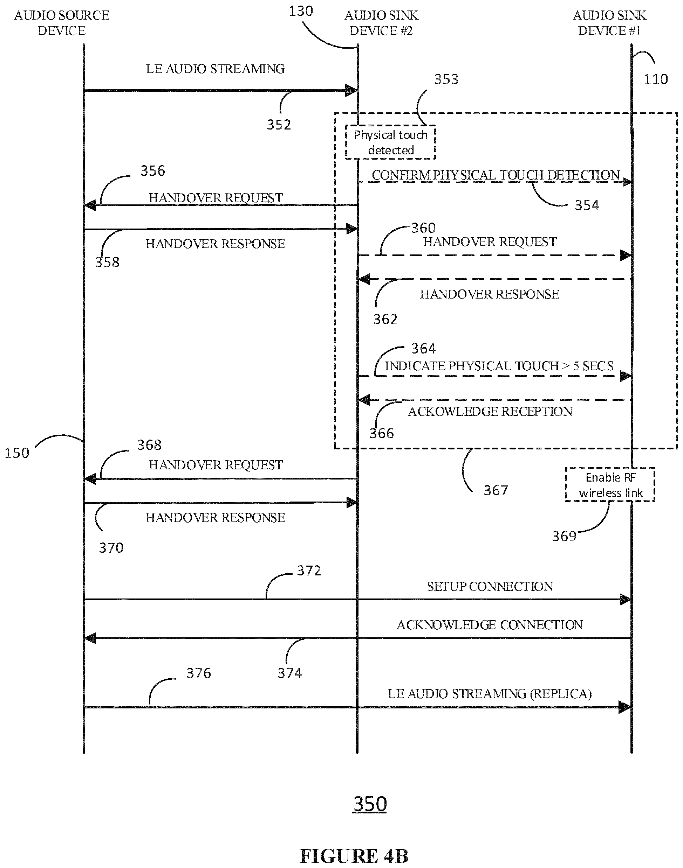

Figure 4B shows an event sequence 350 for sharing an audio stream via Bluetooth LE according to an embodiment. The event sequence 350 may be implemented for example by the audio system 100 where the respective RF transceivers 112, 132, and 152 are configured as Bluetooth LE transceivers similar to method 300 but now implements the use case 180 illustrated in figure 2B. The solid arrows represent Bluetooth LE transactions and the dashed arrows represent BAN transactions. The region 367 indicates when the touch is detected and the body communication channel or body area network is in place or formed.

Step 352 shows the initial Bluetooth LE audio streaming between the audio source device 150 and the off body audio sink device 130.

In step 353, the second audio sink device 130 which may be an off body audio sink device may detect a contact by the wearer of a first audio sink device 110.

In step 354, the second audio sink device 130 may then transmit a confirmation of physical touch detection via the body area network. The second audio sink device 130 may then transmit a handover request 356 to the audio source device 150 and receive a handover response 358 with the STK and Bluetooth ID of the audio source device 150. In some examples the second audio sink device 130 may already store the audio source device ID and secure pairing credentials because there is already an active Bluetooth LE link between the audio source device 150 and the second audio sink device 130. In this case steps 356 and 358 may be omitted.

In step 360, a handover request including the received or stored STK may be transmitted from the second audio sink device 130 to the first audio sink device 110. In step 362 the first audio sink device 110 may transmit a handover response including the STK to be shared with the audio source device 150 to the second audio sink device 130. The first audio sink device 110 may also check the received STK provided for audio source device 150 received from second audio sink device 130.

In step 364 the second audio sink device 130 may indicate that the duration of the physical touch is exceeds a predetermined time. As illustrated this predetermined time is five seconds, but in other examples it may be less than or more than five seconds. In step 366 first audio sink device 110 transmits an acknowledgement of the reception of the physical touch indication by the second audio sink device 130. In some examples steps 364 and 366 may be omitted.

In step 368 the second audio sink device 130 then transmits a handover request including the STK of the first audio sink device 110 to the audio source device 150. In step 370 the audio source device 150 transmits a handover response to the second audio sink device 130. In step 369 the RF wireless transceiver of the first audio sink device 110 may be enabled.

In step 372 a connection request is transmitted between the audio source device 150 and the first audio sink device 110. In step 374 an acknowledge is transmitted from the first audio sink device 110 to the audio source device 150. If the connection is successfully set up then in step 376 a replica of the original audio stream may then be received from the audio source device 150 by the first audio sink device 110. Optionally the second audio sink device 130 may stop receiving the audio stream. In some examples this may depend on the duration of the contact of a wearer of the first audio sink device 110 with the second audio sink device 130.

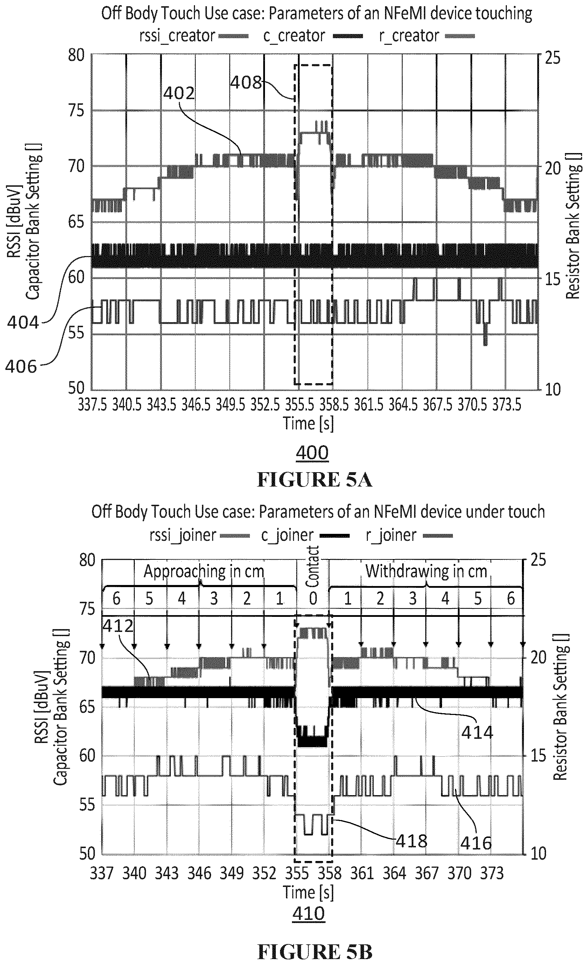

Figure 5A shows a graph 400 indicating the characteristics of an NFEMI transceiver in a body worn device on the y-axis versus time on the x-axis as a wearer of the device moves from a distance of 6 centimeters towards, contact and then away to a distance of 6 centimeters from a further NFEMI device. Line 402 indicates the RSSI received signal value. Line 404 indicates the capacitor bank setting of the NFEMI antenna tuning parameter. Line 406 indicates the resistor bank setting of the NFEMI antenna tuning parameter. Region 408 indicates the time during which a user of the body worn device is touching the further NFEMI device.

Figure 5B shows a graph 410 indicating the corresponding characteristics of the NFEMI transceiver in a further worn device on the y-axis versus time on the x-axis as a wearer of the body worn device of figure 5A moves from a distance of 6 centimeters towards, contact and then away to a distance of 6 centimeters from the further NFEMI device. Line 412 indicates the RSSI received signal value. Line 414 indicates the capacitor bank setting of the NFEMI antenna tuning parameter. Line 416 indicates the resistor bank setting of the NFEMI antenna tuning parameter. Region 418 indicates the time during which a user of the body worn device is touching the further NFEMI device.

In each case in graphs 400, 410 an increase in RSSI level can be observed when the user with on-body NFEMI (creator) device is moving towards the off-body NFEMI (joiner) device; the opposite can be observed when the user is moving away. At the moment the user is touching the antenna of the joiner device, a change in antenna tuning parameter values can be observed at joiner side as shown in graph 410 as can be seen in region 418 by the change in capacitor bank settings 414 and resistor bank settings 416. In contrast at the creator side as shown in graph 400, no noticeable change in antenna tuning parameter values is observed.

This inventors of the present disclosure have appreciated that a physical touch can be detected at an off-body NFEMI device that is being touched, by observing its antenna tuning parameters. This may be used to implement the touch detection in addition to communication of authentication parameters in accordance with embodiments described.

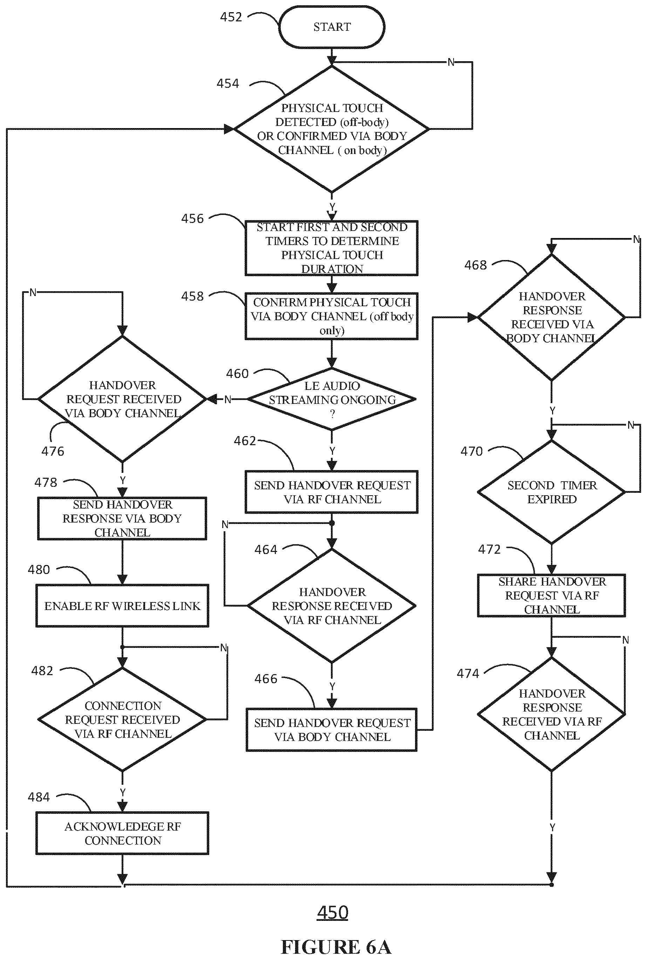

Figure 6A shows a Bluetooth LE link setup method 450 for an audio sink device according to an embodiment. In step 452 the method starts. In step 454 if the audio sink device is an off body audio sink device, for example audio sink device 130, then in step 450 for a physical touch may be detected. If the audio sink device is an on-body audio sink device such as for example audio sink device 110 then a confirmation of a physical touch may be received from an off-body audio sink device such as audio sink device 130 via the body channel and the respective BAN transceivers.

In step 456 first and second timers may be started to determine the duration of the physical touch. The first timer may be used to determine a minimum touch duration for replicating an audio stream. The second timer may be used to determine a minimum touch duration to indicate that the original audio sink device should stop playing the audio stream following handover. In step 458, if the audio sink device is an off-body device then a confirmation of the physical touch may be transmitted via the body channel. In step 460 the method may check whether the audio streaming is ongoing. If the audio streaming is ongoing then the method proceeds to step 462 and a handover request is transmitted via the RF (Bluetooth) channel. In step 464 the method checks if a handover response has been received by the RF channel. If the handover request has not been received the method stays at step 464. If the handover response has been received then the method proceeds to step 466 and a handover request is transmitted via the body channel to a further audio sink device. In step 468 the method checks whether a handover response has been received via the body channel from the further audio sink device. In step 470 the method 450 checks to see whether the second timer has expired. If the second timer has expired then the method moves to step 472 and the handover request is shared via the RF channel with the audio source device. In step 474 the method waits until the handover response has been received by the RF channel and then the method returns to step 454.

Returning to step 460, if audio streaming is not ongoing in the audio sink device then the method proceeds to 476 and checks whether a handover request has been received via body channel. If a handover request has been received and the method proceeds to 478 and a handover response is then transmitted via the body channel. In step 480 the RF wireless link is enabled, and in step 482 the method waits until a connection request has been received via the RF from the audio source device. Once the request has been received, the method proceeds to 484 and the RF connection is acknowledged. This allows audio streaming to be received by the audio sink device. The method then returns to step 454.

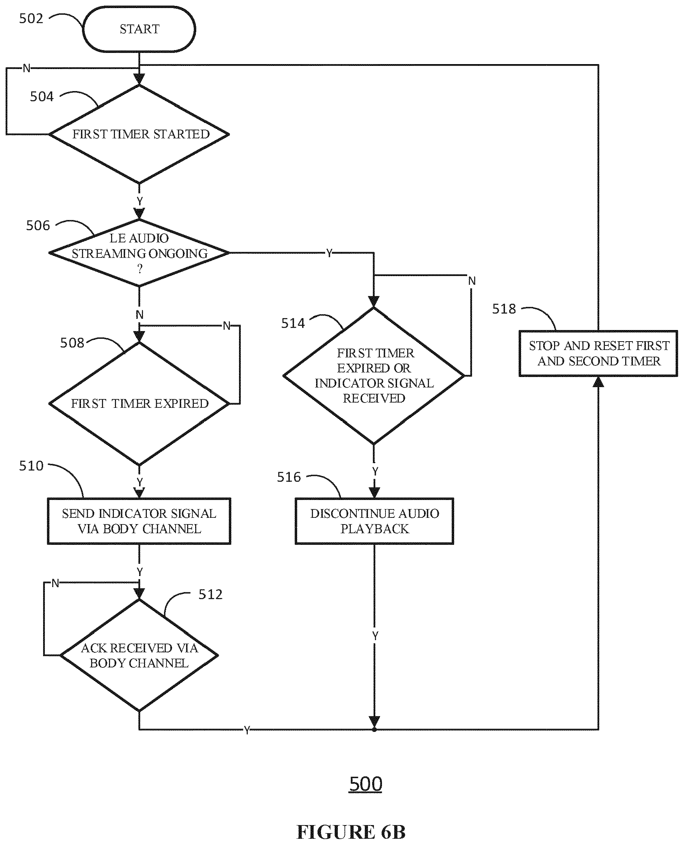

Figure 6B shows a method of audio streaming control 500 for an audio sink device. The method is the same for an on body device and an off body device. The method starts in step 502 where a first timer is started. In step 506 a check is made as to whether audio streaming is ongoing. If audio streaming is ongoing the method proceeds to step 514 where the method checks to see whether the physical touch timer number one is expired or some other indicator signal has been received to stop audio playback. If the time has expired or an indicator signal has been received then the method proceeds to step 516 and audio playback is discontinued. The method then proceeds to step 518 and the physical timers are stopped and reset. The method then returns to step 504.

Returning to step 506 if audio streaming is not ongoing then in step 508 the method checks to see whether the first timer has expired. Once the first timer has expired the method proceeds to step 510 and then an indicator signal is sent via a body channel to a further audio sink device. Following from step 510, in step 512 the method checks whether an acknowledge has been received via the body channel. If an acknowledge has been received then the method proceeds to step 518 and the first and second timers are stopped and reset. The method then returns to step 504. In some examples the first and second timers may be implemented as a single timer.

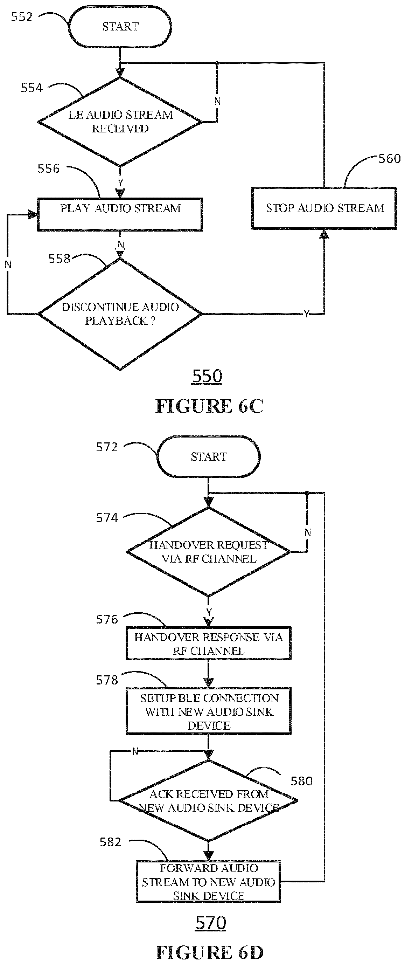

Figure 6C shows an audio streaming control method 550 for the audio sink device implementing the method of Figure 6A. In step 552 the method starts in step 554 the method checks to see whether an audio stream is being received. If an audio stream is being received method proceeds to step 556 and the audio stream is played. In step 558 the method checks whether or not to discontinue audio playback which is determined by the control method 500. If audio playback is to be discontinued then the method proceeds to step 560 and the audio stream is stopped. The method then returns to step 554. Returning to step 558, if no instruction has been received to discontinue audio playback then the method returns to step 556 and audio playback continues.

Figure 6D shows a method 570 of link setup and audio stream forwarding implemented on an audio source device. Method 570 may be implemented for example on audio source device 150 in audio system 100 or in an audio source device in a system with audio sink devices implementing method 450, 500 and 550. An audio stream is already being transmitted to a first audio sink device. In step 572 the method starts. In step 574 the method checks to see whether a handover request has been received via the RF channel. If a handover request has been received, then the method moves to step 576 and a handover response is transmitted via the RF channel. In step 578 a Bluetooth LE connection is set up with a new audio sink device. In step 580 method waits for an acknowledgement to be received from the new audio sink device. If an acknowledgement has been received, then the method moves to step 582 and the audio stream is forwarded to the new audio sink device.

The original process of setting-up the LE Audio stream from audio source to audio sink is not shown. However, the skilled person will appreciate that this process is running as well.

The BLE pairing between audio source device and the new audio sink device may make use of BLE Out-Of-Band (OOB) pairing.

The methods 450, 500, 550 show the main steps but it will be appreciated that some variations may exists. In addition, the skilled person will appreciate that time-out functions that can avoid deadlock situations when no data is received across the communication channel would be required in an implementation but these are not illustrated.

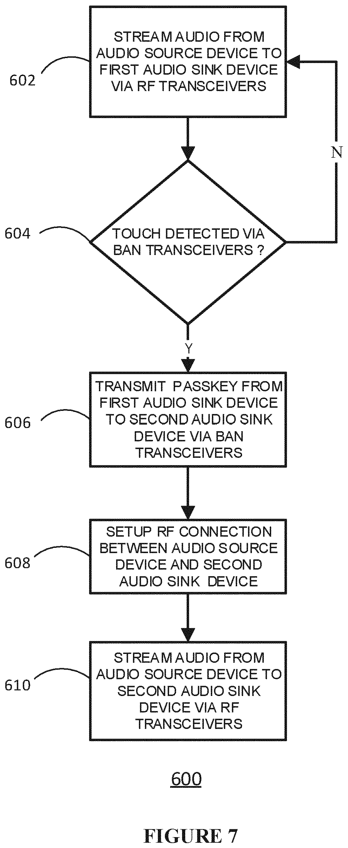

Figure 7 shows a method of sharing an audio stream 600 according to an embodiment which may for example implement either the use case 170 illustrated in figure 2A or the use case 180 illustrated in figure 2B. The method 600 may be implemented for example by the audio sink devices 110, 130 and audio source device 150 in the audio system 100. In step 602 audio may be streamed from an audio source device to a first audio sink device via RF transceivers. In step 604 the method 600 may check to see if a contact has been detected between a user of the first audio sink device for example audio sink device 110 and a second audio sink device, for example audio sink device 130. The touch detection may be done via BAN transceivers or by a dedicated touch detector. In step 606 a passkey may be transmitted from the first audio sink device to the second audio sink device via BAN transceivers. In step 608 an RF connection between the audio source device and the second audio sink device may be set up by the audio source device using the off body device ID received. In step 610 audio may be streamed from the audio source device to the second audio sink device via RF transceivers.

Method 600 may use a Bluetooth LE audio stream making use of Broadcast Isochronous Stream (BIS) mechanism. With BIS, the audio stream is broadcasted from a single master (audio source) device to many slaves or audio sinks (there is no back channel). The broadcast can either be open or the sink device will require a passkey. In the context of the present invention, a passkey may be used to enable audio sharing with specific audio sinks.

By having the passkey stored at an audio sink device that has an active LE audio streaming link, the passkey can be transferred to a new (future) audio sink device over the BAN body channel via BAN transceivers in response to a user wearing one of the audio sink devices touching another audio sink device.

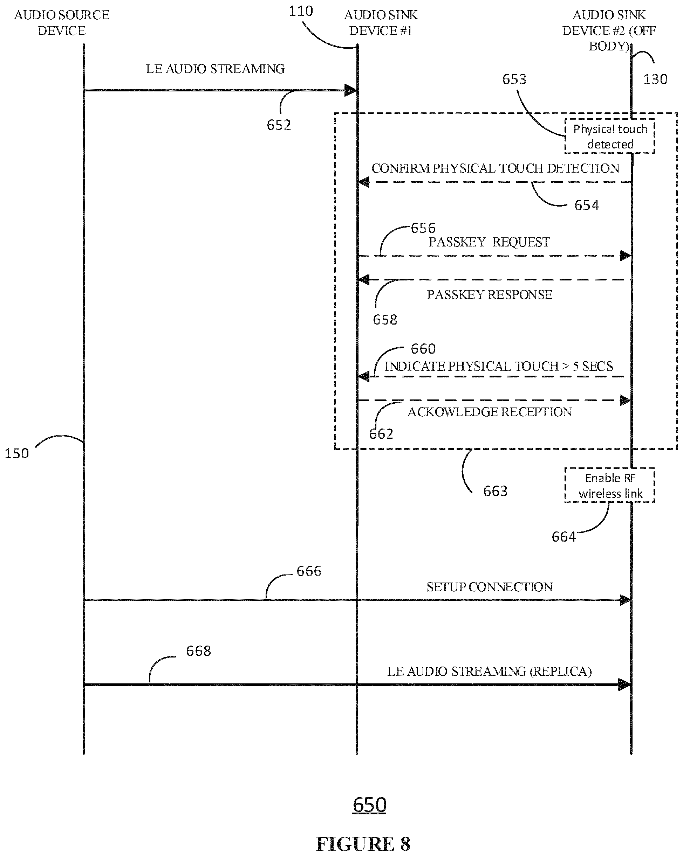

Figure 8 shows an event sequence 650 for sharing an audio stream via Bluetooth LE according to an embodiment. The event sequence 650 may be implemented for example by the audio system 100 where the respective RF transceivers 112, 132, and 152 are configured as Bluetooth LE transceivers and implements the use case 170 illustrated in figure 2A. The solid arrows represent Bluetooth LE transaction and the dashed arrows represent BAN transactions. The region 663 indicates when the touch detection and body communication channel is in place.

Step 652 shows the Bluetooth LE audio streaming between the audio source device 150 and the on body audio sink device 110. In this example the Bluetooth LE audio stream Broadcast Isochronous Stream (BIS) mechanism for connection between the Bluetooth LE devices 150, 110.

In step 653, the second audio sink device 130 which may be an off body audio sink device may detect a contact by the wearer of the first audio sink device 110.

In step 654, the second audio sink device 130 may then transmit a confirmation of physical touch detection via the body area network.

In step 656, a passkey may be transmitted from the first audio sink device 110 to the second audio sink device 130. In step 658 the second audio sink device 130 may transmit a passkey response.

In step 660 the second audio sink device 130 may indicate that the duration of the physical touch exceeds a predetermined time. As illustrated this predetermined time is five seconds, but in other examples it may be less than or more than five seconds. In step 662 first audio sink device 110 transmits an acknowledgement of the reception of the physical touch indication by the second audio sink device 130. In some examples, steps 660 and 662 may be omitted.

The RF wireless link may then be enabled in step 664 in the second audio sink device 130. The setup connection 666 indicates that audio stream 668 may now be received by the second audio sink device 130 as well as the first audio sink device 110. Optionally the first audio sink device 110 may stop receiving the audio stream. In some examples whether or not the first audio sink device 110 stops receiving the audio stream may depend on the duration of the contact of a wearer of the first audio sink device 110 with the second audio sink device 130. It will be appreciated that a similar method to method 650 may be used to implement use case 180 illustrated in figure 2B where the second audio sink device is initially receiving and playing the audio stream.

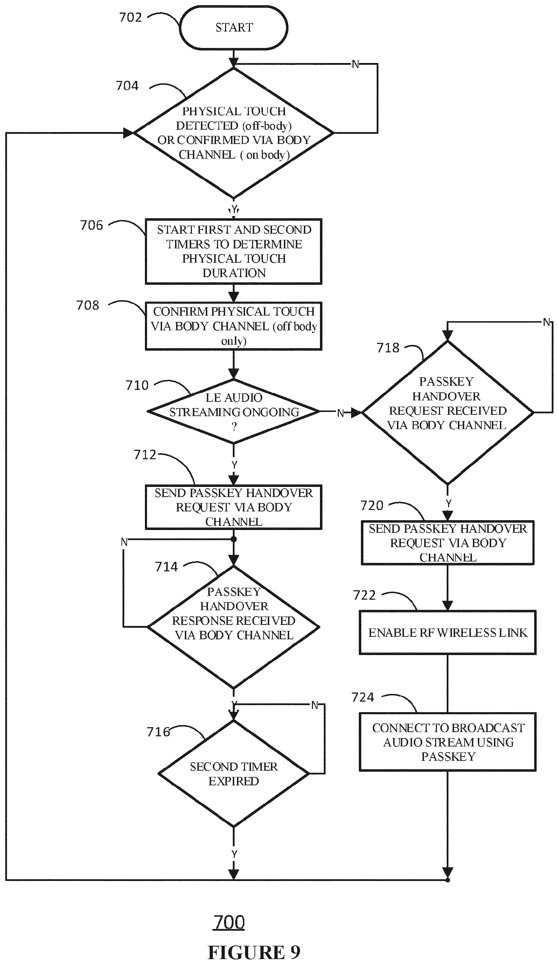

Figure 9 shows a Bluetooth LE link setup method 700 for an audio sink device using Bluetooth LE audio stream Broadcast Isochronous Stream (BIS) mechanism for connection between the Bluetooth LE devices according to an embodiment. In step 702 the method starts. In step 704 if the audio sink device is an off body audio sink device, for example audio sink device 130, then in step 704 a physical touch may be detected. If the audio sink device is an on-body audio sink device such as for example audio sink device 110 then a confirmation of a physical touch may be received from an off-body audio sink device such as audio sink device 130 via the body channel and the respective BAN transceivers.

In step 706 first and second timers may be started to determine the duration of the physical touch. In one example, the first timer may be set to count for a first duration for example two seconds and the second timer may be set to count for a longer duration for example five seconds. The first timer may be used to determine a minimum touch duration for replicating an audio stream. The second timer may be used to determine a minimum touch duration to indicate that the original audio sink device should stop playing the audio stream following handover. In step 708, if the audio sink device is an off-body device then a confirmation of the physical touch may be transmitted via the body channel. In step 710 the method may check whether the audio streaming is ongoing. If the audio streaming is ongoing then the method proceeds to step 712 and a passkey handover request is transmitted via the body channel to a further audio sink device. In step 714 the method checks whether a passkey handover response has been received via the body channel from the further audio sink device. If a response has been received, then in step 716 the method 700 checks to see whether the second timer has expired. If the second timer has expired then the method returns to step 704.

Returning to step 710, if audio streaming is not ongoing in the audio sink device then the method proceeds to 718 and checks whether a passkey handover request has been received via body channel. If a handover request has been received the method proceeds to 720 and a passkey handover response is then transmitted via the body channel. Once the request has been received method proceeds to 722 and the RF wireless link of the audio sink device is enabled. In step 724 the audio sink device may connect to the broadcast audio stream using the passkey.

The audio streaming control method and audio streaming method for an audio sink device using Bluetooth LE audio stream Broadcast Isochronous Stream (BIS) mechanism for connection between the Bluetooth LE devices may be similar to method 500 and method 550.

There is no specific process running at audio source device related to this embodiment using BIS. The audio source device needs to have the passkey broadcasted audio streaming active.

Embodiments described herein provide a novel and intuitive user-device interaction method that enables users to share their personal audio streams with others and other audio sink devices by means of a physical touch without any further user interaction. Some embodiments provide a method and apparatus for forwarding an audio stream between two RF devices, for example Bluetooth LE devices and to another unpaired RF audio sink device by simply touching that device. Moreover, a system solution is described that makes use of human body communication between two audio sink devices including detection of a physical touch while making use of a body area network for example using Near-Field Electromagnetic Induction (NFEMI) communication, IEEE 802.15.6 body area networks or other body communication channel technologies.

Embodiments as described typically have one audio sink device as a body worn device and one audio sink device as an off-body device. In other example both audio sink devices may be off-body devices. In this case, physical touch by a user may be made to two off-body-devices to form the body communication channel.

Embodiments may also share audio streams with two body-worn devices, where each device is worn by a different user. In this case, the detection of the physical touch may be different compared to when using an off-body device. For example when monitoring of antenna tuning parameters may not be sufficient, touch may be sensed by a combination of received signal strength indication (RSSI) combined with a link presence detection method. Alternatively, a different touch sensor may be used instead of a BAN antenna such as an NFEMI antenna.

Embodiments may be included in car entertainment (multimedia systems), consumer audio (smart speakers, home multimedia systems), smart home appliances (smart TVs). A remote control paired with the related TV, containing the TV's BLE credentials. Our invention to be used to receive those credentials via the body channel based on physical touch, to enable audio streaming towards the TV

Alternatively, embodiments may also support audio streaming in the opposite direction e.g. the audio being output for a given TV program, to play on hearables without disturbance to others in the room. The audio sink device may then be located as part of the TV multimedia system. Other example embodiments may include intuitive user interfacing between multiple wireless personal audio devices, consumer audio, for example including but not limited to hearables and headphones . In other examples, audio streams may be shared between multiple people by means of physical touch on the audio sink device.

A method and apparatus for audio stream sharing via a wireless link between an audio source device having an RF transceiver and audio sink devices each having an RF transceiver and a body area network (BAN) transceiver is described. Audio data is wirelessly streamed between an audio source device and an audio sink device via the respective RF transceiver. A user contact is detected on one of the audio sink device and a further audio sink device resulting in a BAN connection between the respective BAN transceivers of the audio sink device and the further audio sink device. In response to determining the user contact, a wireless link is setup between the audio source device and the further audio sink device. Audio data is then wirelessly streamed between the audio source and the further audio sink device via the respective RF transceivers.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub combination.

The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A method (200, 250) of wireless streaming of audio data between an audio source device (150) comprising an RF transceiver (158) and one or more audio sink devices (110,130) each audio sink device comprising a RF transceiver (112,132) and a body area network, BAN, transceiver (116,136), the method comprising:
wirelessly streaming audio data (202,252) between an audio source device (150) and an audio sink device (110,130) via the respective RF transceivers (152; 112, 132);
determining a user contact (204,254) on one of the audio sink device (110,130) and a further audio sink device (130,110) resulting in a BAN connection between the respective BAN transceivers (116,136) of the audio sink device (110,130) and the further audio sink device (130, 110);
in response to determining the user contact, setting up a wireless link (210,260) between the audio source device (110,130) and the further audio sink device (130, 110) ; and
wirelessly streaming audio data (212, 262) between the audio source device (110,130) and the further audio sink device (130,110) via the respective RF transceivers (112,132) wherein at least one of the audio sink device and the further audio sink device is a body-worn audio sink device (110').

2. The method of claim 1 wherein setting up the wireless link comprises:
(i) transmitting a further audio sink device identifier (206, 256) from the further audio sink device (130,110) to the audio sink device (110,130) via a body area network formed between the respective BAN transceivers;
(ii) transmitting the further audio sink device identifier (208,258) from the audio sink device (110,130) to the audio source device (150) via the respective RF transceivers.

3. The method of claim 1 or 2 wherein authenticating the wireless link comprises:
transmitting authentication data (206, 256) from the audio sink device (110,130) to the further audio sink device (130,110) via a body area network (164) formed between the respective BAN transceivers.

4. The method of any preceding claim further comprising:
determining the duration of a user contact (264) on one of the audio sink device (110,130) and the further audio sink device (130,110);
stopping wirelessly streaming audio data (266) between the audio source device and the audio sink device dependent on the contact duration.

5. The method of any preceding claim wherein the respective RF transceivers comprise Bluetooth LE transceivers and the respective BAN transceivers comprise Near Field Electro Magnetic Induction, NFEMI, transceivers.

6. The method of claim 5 wherein setting up the wireless link comprises:
(i) transmitting a further audio sink device identifier comprising a Bluetooth ID and short term key from the further audio sink device to the audio sink device via a body area network formed between the respective NFEMI transceivers;
(ii) transmitting the further audio sink device identifier from the audio sink device (110,130) to the audio source device (150) via the respective RF transceivers.

7. The method of claim 5 or 6 wherein setting up the wireless link comprises:
transmitting authentication data (606) comprising a passkey from the further audio sink device to the audio sink device via a body area network formed between the respective NFEMI transceivers.

8. The method of any preceding claim wherein the audio sink device is a body-worn audio sink device and the further audio sink device is an off-body audio sink device.

9. The method of any of claims 1 to 7 wherein the further audio sink device is a body-worn audio sink device and the audio sink device is an off-body audio sink device.

10. An audio sink device (110,130) comprising:
A body area network, BAN, transceiver (116,136);
an RF transceiver (112,132) ;
a processor (122,142) coupled to the BAN transceiver (116,136) and the RF transceiver (112,132) ; wherein the processor (122,142) is configured to:
receive audio data (160) from an audio source device (150) via the RF transceiver (112,132) for audio playback;
detect a formation of a BAN between the audio sink device (110,130) and a further audio sink device (130,110);
and either:
transmit authentication data to the further audio sink device via the BAN transceiver for setting up a wireless link between the further audio sink device (130,110) and the audio source device (150) ; or
(i) receive a further audio sink device identifier via the BAN transceiver;
(ii) transmit the further audio sink device identifier to the audio source device via the RF transceiver for setting up a wireless link between the further audio sink device and the audio source device;
wherein at least one of the audio sink device and the further audio sink device is a body-worn audio sink device.

11. The audio sink device of claim 10 wherein the processor is further configured to:
determine a duration of the BAN connection corresponding to the duration of a user contact; and
discontinue audio playback by the audio sink device in response to the user contact exceeding a predetermined duration.

12. The audio sink device (110) of claim 10 or 11 wherein the processor is further configured to:
receive a signal (304) via the BAN transceiver from the further audio sink device (130), the signal indicating a contact of a user of the audio sink device with the further audio sink device.

13. The audio sink device (130) of any of claims 10 to 12 wherein the processor is further configured to:
transmit a signal (304) via the BAN transceiver to the further audio sink device (130), the signal indicating a contact of a user of the further audio sink device with the audio sink device.

14. The audio sink device of any of claims 10 to 13 wherein the RF transceiver is configured as a Bluetooth LE transceiver and the BAN transceiver is configured as a Near Field ElectroMagnetic Induction, NFEMI, transceiver.

15. An audio source device (150) for streaming audio to an audio sink device (110,130) and a further audio sink device (130,110), wherein one of the audio sink device and the further audio sink device is a body-worn audio sink device, the audio source device (150) comprising:
an RF transceiver (152);
a processor (158) coupled to the RF transceiver (152); wherein the processor (158) is configured to:
transmit audio data to an audio sink device (110,130) via the RF transceiver;
receive a further audio sink device identifier from the audio sink device (110,130) via the RF transceiver, the further audio sink device identifier being provided to the audio sink device via a body area network channel formed between the audio sink device (110,130) and the further audio sink device (130,110);
in response to receiving the further audio sink device identifier, transmit a handover response to the audio sink device (110,130);
setup the connection with the further audio sink device (130,110): and
transmit audio data to the further audio sink device (130,110) via the RF transceiver (158).
